Europäisches Patentamt

European Patent Office

Office européen des brevets

(11) Numéro de publication: **0 279 747 B1**

(12) **FASCICULE DE BREVET EUROPEEN**

(45) Date de publication de fascicule du brevet: **24.06.92** (51) Int. Cl.5: **G05D 23/24**

(21) Numéro de dépôt: **88400356.7**

(22) Date de dépôt: **17.02.88**

(54) **Système de commande, de régulation et de contrôle d'un ensemble de production de froid.**

(30) Priorité: **20.02.87 FR 8702212**

(43) Date de publication de la demande:
**24.08.88 Bulletin 88/34**

(45) Mention de la délivrance du brevet:
**24.06.92 Bulletin 92/26**

(84) Etats contractants désignés:
**BE DE ES FR GB IT LU NL**

(56) Documents cités:
**EP-A- 0 003 010**
**FR-A- 2 314 455**
**FR-A- 2 521 320**
**US-A- 4 527 247**

(73) Titulaire: **SOCIETE EUROPEENNE INDUSTRIEL-LE DU FROID**
**79 rue du Général Leclerc**
**F-78403 Chatou(FR)**

(72) Inventeur: **Dubernet, Nicolas**
**THOMSON-CSF SCPI 19, avenue de Messine**
**F-75008 Paris(FR)**
Inventeur: **Frechet, Olivier**
**THOMSON-CSF SCPI 19, avenue de Messine**
**F-75008 Paris(FR)**

(74) Mandataire: **Hirsch, Marc-Roger**
**Cabinet Hirsch 34 rue de Bassano**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un système de commande, de régulation et de contrôle d'un ensemble de production de froid comprenant, d'une part, plusieurs sous-ensembles de meubles ou locaux réfrigérés à température négative ou à température positive et, d'autre part, un moyen de contrôle programmable de l'ensemble de production de froid tel qu'un automate programmable ou un ordinateur.

Les appareils ou meubles ou installations ou chambres ou locaux de production de froid ont habituellement une structure autonome et sont indépendants dans leur fonctionnement quels que soient leurs emplacements, que ce soit dans un petit magasin ou dans une grande surface de vente.

Depuis ces dernières années des dispositifs électroniques programmables permettent de créer des automates ou systèmes de commande centralisée de différents appareils ou meubles de production de froid et/ou locaux réfrigérés, installés dans des grandes surfaces de vente en vue de réaliser un meilleur rendement et une plus grande sécurité dans leur fonctionnement et par conséquent une bonne garantie de conservation des produits. Ces systèmes connus de commande centralisée sont plus ou moins efficaces et comportent cependant divers inconvénients. En effet, certains de ces systèmes connus exigent une connexion avec chacun de ces appareils ou meubles et/ou locaux de production de froid. Les longs fils ou câbles qui en résultent sont non seulement onéreux, encombrants et fastidieux à poser mais constituent également une source de parasites électriques risquant de perturber le fonctionnement de ces systèmes. Certains autres de ces systèmes connus de commande centralisée ont une structure trop rigide, car ces systèmes qui sont conçus pour commander un nombre maximal pré-établi d'appareils ou meubles et/ou locaux et suivant des programmes prédéterminés, ne sont pas aptes à être interconnectés pour commander un nombre plus grand de ces appareils ou meubles et/ou locaux et notamment quand ces derniers fonctionnent avec des programmes différents.

On connaît de EP-A-0 003 010 un procédé et un appareil pour limiter l'appel de puissance dans les installations de climatisation. L'appareil comporte des moyens de mesure en continu de la puissance consommée par les appareils individuels de l'installation, ces moyens de mesure étant constitués, d'une part, de moyens d'interface de commande sensibles à des signaux de commande en boucle fermée émis par les appareils individuels de consommation de la puissance et, d'autre part, de moyens de traitement électronique à mémoires, aptes à prévoir l'évolution de la demande de puissance. Les moyens de traitement électroniques comparent les prévisions d'appel de puissance avec des valeurs de seuil mises en mémoire et déclenchent, en cas de dépassement, le débranchement de certains appareils de climatisation, en fonction d'une liste de priorité.

Il est ainsi connu de réaliser la gestion centralisée d'un système de climatisation d'air à l'aide d'un ordinateur ou processeur central, mais de tels systèmes connus ne sont pas adaptés à la régulation et au contrôle des installations complexes de meubles et de locaux réfrigérés telles que celles d'un grand magasin de détail de produits frais et surgelés où la fonction d'économie d'énergie est beaucoup moins importante que la souplesse de fonctionnement et la sûreté de l'alarme et de la sauvegarde en cas d'incident de réfrigération, car la commercialisation de produits réfrigérés ou congelés avariés est absolument prohibée.

La présente invention vise à éviter ces inconvénients et a pour objet un système de commande, de régulation et de contrôle des appareils ou meubles et/ou locaux ou installations de production de froid, qui soit simple et efficace dans sa mise en oeuvre tout en restant souple dans son application à un nombre quelconque de meubles, appareils et/ou locaux regroupés, avec leurs particularités de fonctionnement, en sous-ensembles ou en un ensemble de sous-ensembles.

Selon l'invention, le système de commande, de régulation et de contrôle d'un ensemble de production de froid du type indiqué ci-dessus est caractérisé en ce qu'il comporte: des cartes électroniques programmables de sous-ensemble correspondant à chacun des sous-ensembles et munies chacune de circuits électroniques permettant d'assurer, avec une horloge et des mémoires de stockage d'un programme ou d'instructions, au moins une fonction horloge de dégivrage, une fonction dégivrage, une fonction régulation de température, une fonction alarme, une fonction sauvegarde; des cartes électroniques de mise en mémoire, en nombre égal à celui des cartes de sous-ensemble et aptes à introduire dans les mémoires de la carte électronique programmable de sous-ensemble correspondante un programme ou des instructions avec indication de valeurs telles que l'horaire des débuts de dégivrage, les durées maximales de dégivrage, les seuils de températures de régulation, les seuils de températures de fin de dégivrage, les seuils de températures d'alarme; des cartes électroniques de meuble reliées chacune au meuble ou au local réfrigéré correspondant et à la carte de sous-ensemble correspondante, ces cartes de meuble étant munies de circuits électroniques assurant au moins une fonction thermomètre, une fonction dégivrage, une fonction alarme, une fonction d'affichage et une individualisation par adresse codée; une carte électronique d'interconnexion munie de circuits électroniques reliés à des cartes d'affichage, de boutons de sélection, de bornes d'alimentation, de prises de branchement à l'automate programmable ou à l'ordinateur et/ou à une imprimante, d'entrées-sorties, de témoins d'alarme et en ce que des bus de liaison relient les cartes de sous-ensemble, respectivement aux cartes électroniques de meuble et à la carte d'interconnexion, de manière à permettre d'assurer un contrôle centralisé et individuel de températures et d'alarmes des meubles et/ou locaux réfrigérés faisant partie de l'ensemble de production de froid, par enfoncements successifs des boutons de sélection pour faire défiler dans les cartes d'affichage, respectivement les adresses codées des meubles et/ou locaux réfrigérés, et les températures ou messages affichés dans ces derniers par duplication d'affichage ou les codes des alarmes survenues sur ces meubles et/ou locaux.

Selon un autre mode de réalisation, les cartes électroniques de meuble sont reliées par des bus de liaison avec les autres cartes de meuble et/ou les cartes de sous-ensemble et, à leurs entrées, à au moins une sonde de température et/ou à un capteur de niveau d'eau, et à leurs sorties, à un relais commandant des dispositifs de dégivrage, et à ces dispositifs d'affichage. Les sondes de température sont des sondes à résistance à coefficient négatif de température, et les dispositifs de dégivrage comprennent des résistances chauffantes de dégivrage.

Selon encore un autre mode de réalisation de l'invention, les cartes électroniques de meuble sont aptes à recevoir, des sondes de température correspondantes, des données de températures des meubles et/ou locaux de production de froid, opérer une transformation de ces données analogiques reçues en données numériques, transmettre ces dernières avec leur adresse codée à la carte de sous-ensemble du sous-ensemble dont ces cartes font partie et à déclencher directement dans leurs dispositifs d'affichage respectifs, un affichage de la température mesurée. Dans sa fonction optionnelle de gestion d'affichage et d'alarme, chaque carte électronique de meuble comprend à l'entrée deux sondes de températures, une première sonde reliant la carte de meuble respectivement aux sorties de l'évaporateur du circuit frigorifique du meuble et/ou local de production de froid correspondant et une deuxième sonde reliant la carte de meuble à une zone chaude de meuble et/ou local réfrigéré, la première sonde fournissant à la carte électronique de sous-ensemble les valeurs de température nécessaire à la gestion des fonctions dégivrage et régulation tandis que la deuxième sonde sert, sur la carte de meuble, à l'affichage des données de températures mesurées ou d'un message d'alarme température si les températures des zones chaudes des meubles et/ou locaux dépassent des limites préréglées admises. Dans une fonction optionnelle de contrôle manuel de surchauffe de l'évaporateur du meuble ou local réfrigéré et des températures d'air à l'entrée et à la sortie de la gaine d'air du meuble et/ou local réfrigéré, la carte électronique de meuble comprend à l'entrée quatre sondes de températures, les deux premières sondes reliant cette carte aux points d'entrée et de sortie de l'évaporateur du meuble et/ou local et les deux autres sondes reliant cette carte aux points d'entrée et de sortie de la gaine d'air du meuble et/ou local réfrigéré. Dans sa fonction optionnelle de contrôle d'écoulement d'eau, la carte électronique de meuble comprend à l'entrée un capteur de niveau d'eau la reliant au bac d'eau de dégivrage et émet à destination de la carte électronique de sous-ensemble correspondante, un signal d'alarme dès que l'eau de dégivrage dans le bac dépasse un niveau prédéterminé.

Selon un autre mode de réalisation avantageux du système selon l'invention, les cartes électroniques de mise en mémoire présentent des structures identiques et comprennent individuellement des connecteurs et des circuits électroniques leur permettant de fonctionner en consoles de programmation aptes à introduire, dans les mémoires des cartes électroniques de sous-ensemble, un programme ou une série d'instructions de commande, de régulation et de contrôle des meubles et/ou locaux de production de froid, dans lequel sont indiqués par exemple l'horaire des débuts de dégivrage, les durées maximales de dégivrage, les seuils de températures de fins de dégivrage, les seuils de températures d'alarme, les temps de base d'alimentation électrique des cordons chauffants d'antibuée. Par ailleurs, les cartes électroniques de meuble présentent une structure identique et comprennent individuellement, d'une part: des circuits électroniques leur permettant de constituer une horloge et des mémoires de stockage d'un programme ou d'instructions mettant en oeuvre au moins une fonction horloge de dégivrage, une fonction dégivrage, une fonction régulation, une fonction alarme, une fonction sauvegarde et, en option, une fonction antibuée et, d'autre part: des connecteurs de branchement avec les bus de liaison, avec les autres cartes électroniques actives et des connecteurs de branchement aux sources d'alimentation électrique et aux cartes électroniques de mise en mémoire.

Pour mieux faire comprendre l'invention, on en décrit ci-après un certain nombre d'exemples de réalisation illustrés par des dessins ci-annexés dont:

- la figure 1 représente une vue schématique d'un ensemble de production de froid mettant en oeuvre le système de l'invention, formé de plusieurs groupements ou sous-ensembles d'appareils ou meubles de production de froid;

- la figure 2 représente une vue schématique d'un groupement d'appareils ou meubles de production de froid mettant en oeuvre le procédé de l'invention, équivalent à un des sous-ensembles de l'ensemble de production de froid de la figure 1;

- la figure 3 représente une vue schématique d'un autre groupement d'appareils ou meubles de production de froid mettant en oeuvre le système de l'invention, équivalent à un autre des sous-ensembles de l'ensemble de production de froid de la figure 1, et

- la figure 4 représente une vue schématique d'une carte électronique faisant partie de l'ensemble de production de froid de la figure 1.

L'invention est applicable à tous appareils ou meubles de production de froid et/ou à toutes chambres ou salles froides ou tous locaux réfrigérés. Ces appareils ou meubles de production de froid comprennent ceux à températures négatives et ceux à températures positives autrement dit ceux destinés à la congélation et ceux pour la réfrigération.

Selon l'invention, un système de commande, de régulation et de contrôle de un ou plusieurs appareils ou meubles et/ou locaux de production de froid comprend dans un groupement en un sous-ensemble de un ou plusieurs de ces appareils ou meubles et/ou locaux, une utilisation d'un moyen de commande ou moyen directeur programmable, de moyens intermédiaires ou moyens d'interfaces et d'un moyen amovible de mise en mémoire de ce moyen directeur, et dans un regroupement d'un certain nombre de ce sous-ensemble en un ensemble, une utilisation d'un moyen de liaison reliant les moyens directeurs de ces sous-ensembles. Le moyen directeur programmable assure une réception de données envoyées par les moyens intermédiaires et une émission ou retransmission d'instructions à destination de ces moyens intermédiaires. Les moyens intermédiaires assurent d'une part une réception des données issues des appareils ou meubles et/ou locaux et une transmission de ces données à leur moyen directeur programmable correspondant, et d'autre part une réception d'instructions de ce moyen directeur programmable et une exécution dans ces appareils ou meubles et/ou locaux des tâches assignées par ces instructions ou données. Le moyen amovible de mise en mémoire assure une introduction dans le moyen directeur programmable, un programme ou une série d'instruction de fonctionnement. Le moyen de liaison assure une interconnexion des moyens directeurs, une duplication de l'affichage de données affichées dans les appareils ou meubles et/ou locaux, et le cas échéant, une retransmission aux moyens directeurs et moyens intermédiaires d'instructions issues d'un dispositif de commande centralisée ou automate programmable, et/ou à une imprimante d'informations traversant ce moyen de liaison. Les moyens décrits ci-dessus permettent une commande, une régulation et un contrôle faciles, économiques, efficaces de un ou plusieurs appareils meubles et/ou locaux de production de froid isolés ou groupés en un petit sous-ensemble ou regroupés en un grand ensemble formé de plusieurs petits sous-ensembles. Ce regroupement est réalisé, non pas avec une pluralité de longs fils ou câbles selon le mode connu mais au moyen de bus relativement courts de liaison d'un type connu à trois fils par exemple. Ces moyens permettant également une commande, une régulation et un contrôle centralisés et individuels de chacun de ces appareils, meubles, ou locaux de production de froid quelles que soient leurs caractéristiques propres de fonctionnement.

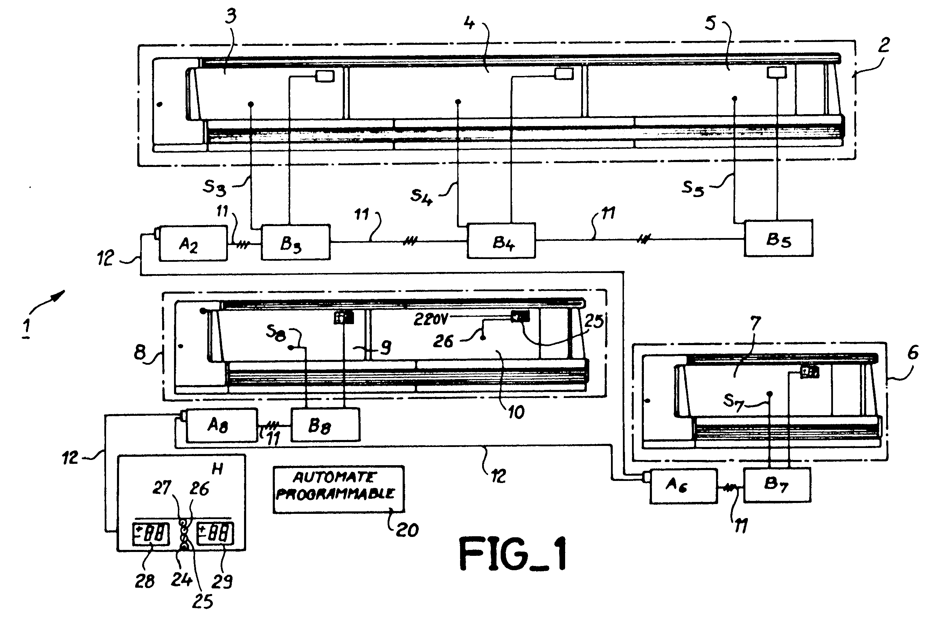

Un ensemble de production de froid 1 mettant en oeuvre le système de l'invention décrit dans les paragraphes précédents pris comme exemple et illustré schématiquement dans la figure 1, comprend d'une part un premier sous-ensemble 2 formé de trois meubles à températures négatives 3, 4, 5, un deuxième sous-ensemble 6 constitué d'un meuble à température négative 7 et un troisième sous-ensemble 8 comportant deux meubles à températures positives 9, 10, et d'autre part un moyen directeur du procédé de commande, de régulation et de contrôle, comportant des cartes électroniques indiquées en A dont le nombre (trois = $A_2$, $A_6$, $A_6$) est égal au nombre de sous-ensembles 2, 6, 8 formant cet ensemble de production de froid 1, de moyens intermédiaires ou d'interfaces comportant des cartes électroniques indiquées en B dont le nombre (cinq = $B_3$, $B_4$, $B_5$, $B_7$, $B_8$) est égal à la somme du nombre (quatre) de meubles à températures négatives 3, 4, 5, 7 des sous-ensembles 2, 6 et du nombre (un) de sous-ensemble 8 de meubles à températures positives, et un moyen amovible de mise en mémoire de ce moyen directeur comportant des cartes électroniques indiquées en A' dont le nombre (trois = $A'_2$, $A'_6$, $A'_8$) est égal au nombre de cartes électroniques A (trois = $A_2$, $A_6$, $A_6$) de ce moyen directeur de ce procédé, et un moyen de liaison comportant une carte électronique d'interconmnexion indiqué en H, et des bus de liaison 11, 12 reliant les cartes B de chacun des sous-ensembles entre elles respectivement aux cartes A correspondantes à ces sous-ensembles, et raccordant leurs cartes A à la carte d'interconnexion H dans un cas d'un regroupement de ces sous-ensembles.

Les cartes électroniques B, destinées chacune à être montées dans un des appareils ou meuble et/ou local de production de froid correspondant 3, 4, 5, 7, 8 de l'ensemble 1, ont une structure identique et comprennent individuellement des circuits électroniques de types connus leur permettant de réaliser au moins une fonction thermomètre, une fonction dégivrage, une fonction alarme, une fonction gestion d'affichage et d'alarme, et une option une fonction contrôle de surchauffe de l'évaporateur et de températures d'air à l'entrée et à la sortie de la gaine d'air, et une fonction contrôle d'écoulement d'eau de dégivrage.

Les cartes électroniques B comprennent individuellement des bus les mettant en liaison avec les autres cartes électroniques B ou A, et habituellement à leurs entrées une sonde de températures S ($S_3$, $S_4$, $S_5$, $S_7$, $S_8$) et en option une ou plusieurs autres sondes de température SO ($SO_3$, $SO_4$, $SO_5$, $SO_7$, $SO_8$) et/ou un capteur de niveau d'eau de types connus, et à leurs sorties, un relais commandant des dispositifs de dégivrage de ces appareils ou meubles et/ou locaux de production de froid, un dispositif d'affichage de types également connus. Les sondes de températures sont par exemple des sondes à résistance à coefficient négatif de température tandis que les dispositifs de dégivrage et d'antibuée sont respectivement ceux à résistances chauffantes. Dans leur fonction thermomètre, les cartes électroniques B reçoivent des sondes de température S, des données de températures des appareils ou meubles et/ou locaux de production de froid, - opèrent une transformation de ces données analogiques reçus en données numériques, - transmettant ces dernières avec leur adresse codée à la carte A du sous-ensemble dont ces cartes B font partie et déclenchent directement dans leur dispositifs d'affichage respectifs, un affichage de la température mesurée. Dans leur fonction dégivrage, les cartes électroniques B d'une part reçoivent un signal à adresse codée d'instructions de dégivrage envoyé par leurs cartes A correspondantes, exécutent le dégivrage en enclenchant un relais commandant le dispositif de dégivrage par une fermeture par exemple d'un contacteur d'alimentation électrique des résistances de "dégivrage" sous la forme d'une lettre "d" dans le dispositif d'affichage à la place de la température mesurée par la sonde S, et d'autre part déclenchent la fin de dégivrage dès que la température de fin de dégivrage réglée est atteinte, en interrompant l'alimentation électrique du relais, et simultanément affichent un message "fin de dégivrage" sous la forme de deux lettres "Fd" dans le dispositif d'affichage jusqu'à ce que le température de l'appareil ou meuble et/ou local atteigne +10° C pour un fonctionnement de ce dernier en régime de réfrigération ou -15° C pour un fonctionnement de ce dernier en régime de congélation, et transmettent l'information de fin de dégivrage à leurs cartes électroniques A correspondantes.

Dans leur fonction alarme, pour un cas de défaut dans des circuits frigorifiques par exemple les cartes électroniques B qui reçoivent par leurs sondes de températures S des données de températures franchissant des limites réglées de températures, effectuent directement un affichage d'un message "alarme température" sous la forme de deux lettes "At" dans les dispositifs d'affichage et transmettant cette information avec adresse codée à leurs cartes électroniques A correspondantes et pour un cas de défaut dans des sondes par exemple, le cartes électroniques B qui ne reçoivent aucune donnée de température, effectuent directement un affichage d'un message "alarme sonde" sous la forme de deux lettres "dS" dans les dispositifs d'affichage et transmettent cette information avec adresse codée à leurs cartes électroniques A correspondantes.

Dans leur fonction optionnelle gestion d'affichage et d'alarme, les cartes électroniques B comprennent individuellement à l'entrée deux sondes de températures, une première sonde S reliant ces cartes B respectivement aux sorties des évaporateurs des circuits frigorifiques des appareils ou meubles et/ou locaux de production de froid correspondants et une deuxième sonde SO reliant ces cartes B à des zones chaudes des appareils ou meubles et/ou locaux de production de froid. Les cartes électroniques B avec leur première sonde S fournissent à la carte électronique A les valeurs de température nécessaire à la gestion des fonctions dégivrage et régulation tandis qu'avec leur deuxième sonde SO, les cartes B effectuent un affichage des données de températures mesurées ou d'un message d'alarme température "At" au cas où les températures des zones chaudes de ces appareils ou meubles et/ou locaux dépassent des limites préréglées admises et transmettent respectivement ces informations à leurs cartes électroniques A correspondantes.

Dans leur fonction optionnelle de contrôle manuel de surchauffe de l'évaporateur et de températures d'air à l'entrée et à la sortie de la gaine d'air des appareils ou meubles et/ou locaux de production de froid, les cartes électroniques B comprennent, à leurs entrées ou par l'intermédiaire des cartes de connexion, quatre sondes de températures SO, les deux premières sondes SO reliant ces cartes B aux points d'entrée et de sortie des évaporateurs de ces appareils ou meubles et/ou locaux et les deux autres sondes SO reliant ces cartes B aux points d'entrée et de sortie de la gaine d'air de ces appareils ou meubles et/ou locaux.

Dans leur fonction optionnelle de contrôle d'écoulement d'eau, les cartes électroniques B comprennent à leurs entrées un capteur de niveau d'eau les reliant au bac d'eau de dégivrage et émettent à destination des cartes électroniques A correspondantes, un signal d'alarme dès que l'eau de dégivrage dans le bac dépasse un niveau prédéterminé et effectuent un affichage d'alarme écoulement d'eau "AE".

Les cartes électroniques A auxquelles sont reliées les cartes électroniques B des sous-ensembles 2, 6, 8 correspondants de l'ensemble 1, ont une structure identique et comprennent individuellement d'une part des circuits électroniques de type connus leur permettant de constituer une horloge et des mémoires de stockage d'un programme ou d'instructions mettant en oeuvre au moins une fonction horloge de dégivrage, une fonction dégivrage, une fonction régulation, une fonction alarme, une fonction sauvegarde et en option une fonction antibuée, et d'autre part des bus de liaison avec les autres cartes électroniques B, A ou H, et des connecteurs de branchement aux sources d'alimentation électrique, aux autres cartes électroniques A et B et/ou au cartes consoles A'. Les programmes de fonctionnement stockés dans les cartes électroniques A comprennent des horaires de début uniformes ou différents du dégivrage respectif des appareils ou meubles et/ou locaux de production de froid faisant partie des sous-ensembles 2, 6, 8 correspondant à ces cartes électroniques A, une ou des durées maximales de ce dégivrage, des seuils de régulation de températures dans les appareils ou meubles et/ou locaux, des seuils de températures de fin de dégivrage, des seuils de températures d'alarme, des seuils de régulation de ventilation en application du dégivrage à gaz chaud selon une technique connue, et un seuil de régulation des cordons antibuée.

Dans leur fonction horloge de dégivrage, les cartes électroniques A comparent l'horaire des débuts de dégivrage de leur programme enregistré avec leur horloge qui est préalablement mise à l'heure pratique de la vie quotidienne et envoient dès leur coïncidence, des signaux à adresse codée d'instructions de dégivrage aux cartes électroniques B. Les fins de dégivrage sont déclenchées par la carte A en application dégivrage au temps ou par les cartes B selon un processus décrit dans un paragraphe précédent en application dégivrage électrique. Habituellement l'information de fin de dégivrage transmise par les cartes B est parvenue aux cartes électroniques A avant la fin de la durée maximale de dégivrage indiquée dans le programme enregistré dans ce dernières. Dans le cas où le dégivrage continue d'une façon anormale au-delà de cette durée maximale de dégivrage, les cartes électroniques A envoient aux cartes B dès la fin de cette durée maximale de dégivrage, un signal avec adresse codée d'instructions d'interruption de ce dégivrage. Chacun des débuts de dégivrages peut être programmé à n'importe quel moment de l'espace de 24 heures. Pratiquement huit dégivrages différents peuvent être effectués dans cet espace de temps de 24 heures.

Dans leur fonction régulation, les cartes électroniques A reçoivent de la carte B adressée zéro des données de températures des appareils ou meubles et/ou locaux correspondants, les comparent avec les seuils de températures de régulation indiqués dans leur programme enregistré et agissent en conséquence sur des relais pour arrêter ou mettre en marche respectivement ces appareils où meubles et/ou locaux de production de froid. Dans le cas où le programme enregistré comporte une régulation de jour et une régulation de nuit qui se distinguent par des seuils différents de températures, une deuxième sonde placée dans la zone chaude de la vitrine est connectée à la carte B adressée zéro. Des seuils de coupure et d'enclenchement de régulation de températures de jour (sonde 1) et de nuit (sonde 2) sont programmés. La simple présence des rideaux du couvercle de nuit crée un équilibrage des températures d'air qui suffit au changement de sonde de référence.

Dans leur fonction alarme, les cartes électroniques A déclenchent leur relais d'alarme, soit après avoir reçu des informations d'alarme température ou sonde ou écoulement d'eau avec adresse codée, envoyées par les cartes a, soit consécutivement à un contrôle d'un dépassement de la durée maximale de dégivrage indiqué dans leur programme enregistré, soit après une détection d'un non fonctionnement, ou d'une absence d'alimentation électrique d'une carte, ou d'une absence de programmation de la carte électronique A, ou encore par mise hors circuit de la batterie nécessaire à la fonction sauvegarde.

Dans leur fonction sauvegarde, les cartes électroniques A déclenchent l'alarme lors d'une absence de leur alimentation normale en électricité et commutent simultanément le branchement de leurs circuits électroniques sur une batterie électrique de secours, ce qui permet de sauvegarder leur programme enregistré et la continuité de leur fonctionnement et de la marche de leur horloge.

Dans leur fonction optionnelle antibuée, les cartes électroniques A effectuent une régulation d'alimentation électrique des cordons chauffants en comparant la durée de mise de ceux-ci sous tension, avec un temps de base indiqué dans le programme de fonctionnement de ces cartes A.

Les cartes électroniques A' ont des structures identiques et comprennent individuellement des connecteurs et des circuits électroniques de types connus leur permettant de fonctionner en consoles de programmation aptes à introduire dans les mémoires des cartes électroniques A un programme ou une série d'instructions de commande, de régulation et de contrôle des appareils ou meubles et/ou locaux de production de froid dans lequel sont indiqués par exemple l'horaire du début des dégivrages, les durées maximales des dégivrages, les seuils de températures des fins de dégivrage, les seuils de températures d'alarme, les temps de base d'alimentation électrique des cordons chauffants d'antibuée.

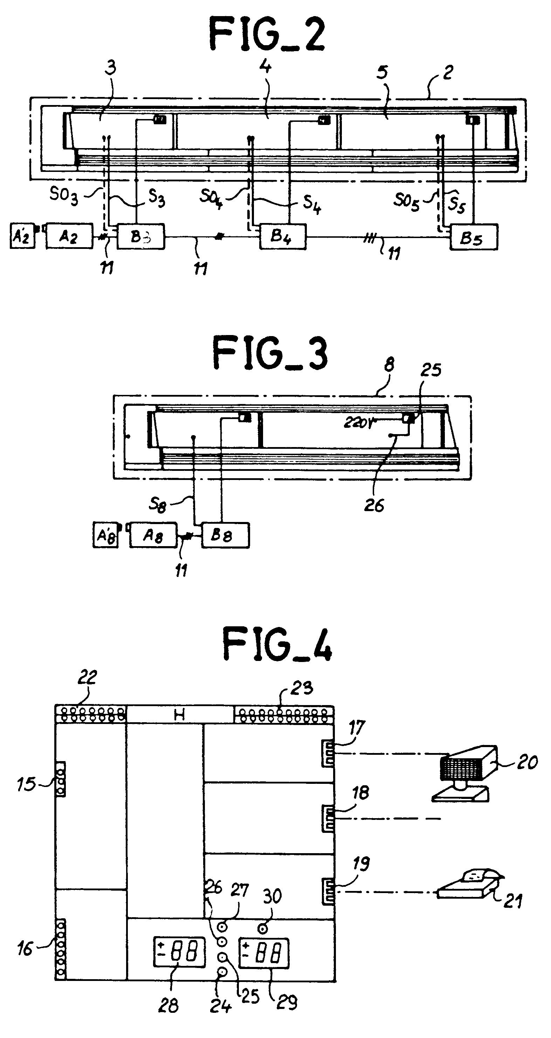

La carte électronique d'interconnexion H comprend (figures 1 et 4) des circuits électroniques de types connus, des bornes d'alimentation électrique 15, des connecteurs 16 pour des bus de liaison 12, des prises de branchement 17, 18, 19 éventuellement pour un automate ou ordinateur 20 et/ou une imprimante 21, des entrées 22, des sorties 23, des cartes d'affichage 28,29 et quatre boutons 24, 25, 26, 27 de duplication d'affichage de températures ou de messages affichés ou d'interfaces d'alarmes codées dans les appareils ou meubles et/ou locaux de production de froid et une diode électroluminescente 30 témoin d'une présence d'alarme. La carte électronique H permet une interconnexion des sous-ensembles 2,6,8 d'appareils ou meubles et/ou locaux 3,4,5,7,9,10, et un contrôle centralisé et individuel de températures de ces derniers par l'intermédiaire des cartes d'affichage 22, 23 et du bouton de sélection 24, ce qui facilite leur surveillance et leur maintenance notamment quand ces appareils ou meubles et/ou locaux sont nombreux et installés dispersés sur une grande surface. Lors d'un contrôle de températures à travers la carte d'interconnexion H, l'une des cartes d'affichage 22, 23 de celle-ci, la carte 22 par exemple indique une adresse codée identifiant l'un des appareils ou meubles et/ou locaux de l'ensemble, et l'autre carte 23 figure une duplication d'une température ou d'un message affiché ou d'un code d'alarme à cette adresse codée. Le bouton de sélection 24 assure l'accès au programme duplication température. Les boutons 26, 27 permettent par enfoncements successifs, un défilement dans ces deux cartes 28 et 29 les adresses codées de ces appareils ou meubles et/ou locaux et les températures ou messages affichés dans ceux-ci. Le bouton 25 assure après enfoncement l'accès au programme transmission d'alarmes. Les boutons 26 et 27 permettent par enfoncements successifs un défilement dans ces deux cartes 28 et 29 des adresses et codes d'alarmes des appareils ou meubles et/ou locaux concernés.

Lors d'une utilisation d'un automate programmable d'un type connu 20 de commande centralisée, de régulation et de contrôle, ce dernier est branché sur une des prises 17, 18 selon que les informations transmises sont codées en RS 232 ou en TTY 20 mA par exemple et les cartes électroniques H et A permettent un passage aller et retour de ces informations entre cet automate 20 et les cartes B destinataires identifiées individuellement par adresses codées.

Les moyens de l'invention décrits ci-dessus permettent ainsi une grande souplesse dans la commande, la régulation et le contrôle des appareils ou meubles et/ou locaux de production de froid quel que soit leur nombre allant de quelques unités dans une boutique ou magasin jusqu'à plusieurs dizaines et plus d'unités dans une grande surface de vente, et quels que soient leurs regroupements et leurs caractéristiques frigorifiques autrement dit leur fonctionnement à températures négatives ou leur fonctionnement à températures positives.

Ces moyens permettant également grâce à des programmes adequats introduits dans les cartes A, de réaliser une économie d'énergie par une répartition optimale de fonctionnement des unités qui font partie de l'ensemble, en tenant compte des heures à grande consommation d'élecitcité ou heures de pointe à tarif élevé, et des heures à faible consommation d'électricité ou heures creuses à tarif réduit ou avantageux.

Selon une variante de réalisation, aux moyens décrits ci-dessus est ajouté un moyen d'affichage autonome de mesure de températures constitué par exemple par une carte thermomètre digital de type connu 25 alimentée par une source électrique V et qui a pour fonction unique d'indiquer la température captée par une sonde 26.

## Revendications

1. Système de commande, de régulation et de contrôle d'un ensemble de production de froid (1) comprenant, d'une part, plusieurs sous-ensembles (2, 6, 8) de meubles ou locaux réfrigérés à température négative (3, 4, 5) ou à température positive (9, 10) et, d'autre part, un moyen de contrôle programmable de l'ensemble de production de froid tel qu'un automate programmable ou un ordinateur (20), caractérisé en ce que le système comporte: des cartes électroniques programmables de sous-ensemble (A2, A6, A8) correspondant à chacun des sous-ensembles (2, 6, 8) et munies chacune de circuits électroniques permettant d'assurer, avec une horloge et des mémoires de stockage d'un programme ou d'instructions, au moins une fonction horloge de dégivrage, une fonction dégivrage, une fonction régulation de température, une fonction alarme, une fonction sauvegarde; des cartes électroniques de mise en mémoire (A'2, A'6, A'8), en nombre égal à celui des cartes de sous-ensemble et aptes à introduire dans les mémoires de la carte électronique programmable de sous-ensemble correspondante un programme ou des instructions avec indication de valeurs telles que l'horaire des débuts de dégivrage, les durées maximales de dégivrage, les seuils de températures de régulation, les seuils de températures de fin de dégivrage, les seuils de températures d'alarme; des cartes électroniques de meuble (B3, B4, B5, B7, B8) reliées chacune au meuble ou au local réfrigéré correspondant (3, 4, 5, 7, 9, 10) et à la carte de sous-ensemble correspondante (A2, A6, A8), ces cartes de meuble étant munies de circuits électroniques assurant au moins une fonction thermomètre, une fonction dégivrage, une fonction alarme, une fonction d'affichage et une individualisation par adresse codée; une carte électronique d'interconnexion (H) munie de circuits électroniques reliés à des cartes d'affichage (28, 29), de boutons de sélection (24, 25, 26, 27), de bornes d'alimentation (15), de prises de branchement (17, 18, 19) à l'automate programmable ou à l'ordinateur (20) et/ou à une imprimante (21), d'entrées-sorties (22, 23), de témoins d'alarme et en ce que des bus de liaison (12) relient les cartes de sous-ensemble (A2, A6, A8), respectivement aux cartes électroniques de meuble (B3, B4, B5, B7, B8) et à la carte d'interconnexion (H), de manière à permettre d'assurer un contrôle centralisé et individuel de températures et d'alarmes des meubles et/ou locaux réfrigérés (3, 4, 5, 7, 9, 10) faisant partie de l'ensemble de production de froid, par enfoncements successifs des boutons de sélection (24, 25, 26, 27) pour faire défiler dans les cartes d'affichage (28, 29), respectivement les adresses codées des meubles et/ou locaux réfrigérés, et les températures ou messages affichés dans ces derniers par duplication d'affichage ou les codes des alarmes survenues sur ces meubles et/ou locaux.

2. Système selon la revendication 1, caractérisé en ce que les cartes électroniques de meuble (B) sont reliées par des bus de liaison (11) avec les autres cartes de meuble (B) et/ou les cartes de sous-ensemble (A2, A6, A8) et, à leurs entrées, à au moins une sonde de température (S3, S4, S5, S7, S8; SO3, SO4, SO5, SO7, SO8) et/ou à un capteur de niveau d'eau, et à leurs sorties, à un relais commandant des dispositifs de dégivrage, et à des dispositifs d'affichage.

3. Système selon la revendication 2, caractérisé en ce que les sondes de température (S, SO) sont des sondes à résistance à coefficient négatif de température, et en ce que les dispositifs de dégivrage comprennent des résistances chauffantes de dégivrage.

4. Système selon les revendications 2 à 3, caractérisé en ce que les cartes électroniques de meuble (B3, B4, B5, B7, B8) sont aptes à recevoir, des sondes de température correspondantes, des données de températures des meubles et/ou locaux de production de froid, à opérer une transformation de ces données analogiques reçues en données numériques, à transmettre ces dernières avec leur adresse codée à la carte de sous-ensemble (A2, A6, A8) du sous-ensemble dont ces cartes font partie et à déclencher directement dans leurs dispositifs d'affichage respectifs, un affichage de la température mesurée.

5. Système selon les revendications 1 à 4, caractérisé en ce que, dans sa fonction optionnelle de gestion d'affichage et d'alarme, chaque carte électronique de meuble (B) comprend à l'entrée deux sondes de températures, une première sonde (S) reliant la carte de meuble (B) respectivement aux sorties de l'évaporateur du circuit frigorifique du meuble et/ou local de production de froid correspondant et une deuxième sonde (SO) reliant la carte de meuble (B) à une zone chaude de meuble et/ou local réfrigéré, la première sonde (S) fournissant à la carte électronique de sous-ensemble (A) les valeurs de température nécessaires à la gestion des fonctions dégivrage et régulation tandis que la deuxième sonde (SO) sert, sur la carte de meuble (B) à l'affichage des données de températures mesurées ou d'un message d'alarme température si les températures des zones chaudes des meubles et/ou locaux dépassent des limites préréglées admises.

6. Système selon les revendications 1 à 5, caractérisé en ce que, dans une fonction optionnelle de contrôle manuel de surchauffe de l'évaporateur du meuble ou local réfrigéré et des températures d'air à l'entrée et à la sortie de la gaine d'air du meuble et/ou local réfrigéré, la carte électronique de meuble (B) comprend à l'entrée quatre sondes de températures (SO), les deux premières sondes reliant cette carte (B) aux points d'entrée et de sortie de l'évaporateur du meuble et/ou local et les deux autres sondes reliant cette carte (B) aux points d'entrée et de sortie de la gaine d'air du meuble et/ou local réfrigéré.

7. Système selon les revendications 1 à 6, caractérisé en ce que, dans sa fonction optionnelle de contrôle d'écoulement d'eau, la carte électronique de meuble (B) comprend à l'entrée un capteur de niveau d'eau la reliant au bac d'eau de dégivrage et émet à destination de la carte électronique de sous-ensemble correspondante (A), un signal d'alarme dès que l'eau de dégivrage dans le bac dépasse un niveau prédéterminé.

8. Système selon les revendications 1 à 7, caractérisé en ce que les cartes électroniques de mise en mémoire (A') présentent des structures identiques et comprennent individuellement des connecteurs et des circuits électroniques leur permettant de fonctionner en consoles de programmation, aptes à introduire, dans les mémoires des cartes électroniques de sous-ensemble (A), un programme ou une série d'instructions de commande, de régulation et de contrôle des meubles et/ou locaux de production de froid (3, 4, 5, 7, 9) dans lequel sont indiqués par exemple l'horaire des débuts de dégivrage, les durées maximales de dégivrage, les seuils de températures de fins de dégivrage, les seuils de températures d'alarme, les temps de base d'alimentation électrique des cordons chauffants d'antibuée.

9. Système selon les revendications 1 à 8, caractérisé en ce que les cartes électroniques de meuble (B) présentent une structure identique et comprennent individuellement, d'une part: des circuits électroniques leur permettant de constituer une horloge et des mémoires de stockage d'un programme ou d'instructions mettant en oeuvre au moins une fonction horloge de dégivrage, une fonction dégivrage, une fonction régulation, une fonction alarme, une fonction sauvegarde et, en option, une fonction antibuée et, d'autre part: des connecteurs de branchement avec les bus (11) de liaison, avec les autres cartes électroniques actives (B, A ou H) et des connecteurs de branchement aux sources d'alimentation électrique et aux cartes électroniques de mise en mémoire (A').

**Claims**

1. Controlling, regulating and monitoring system for a refrigerating installation (1) comprising, on the one hand, a plurality of groups (2, 6, 8) of cooled cabinets or rooms wherein the cooling temperature may be lower (3, 4, 5) or higher (9, 10) than 0°C, and on the other hand programmable monitoring means for the refrigerating installation, such as a programmable controller or a computer (20), characterized in that it comprises: programmable electronic group cards (A2, A6, A8) corresponding to each one of said groups (2, 6, 8) and provided each with electronic circuits to carry out, with a clock and memories for storing a program or instructions, at least one ice-removing (de-icing) clock function, one ice-removing function, one temperature regulating function, one alarm (warning) function and one protection function; memorizing electronic cards (A'2, A'6, A'8) the number of which is equal to that of said group cards, and which are adapted to inject into the memories of the programmable electronic group cards a program or instructions comprising indications concerning values such as the timing of the beginning of ice-removing (de-icing) operations, the maximum durations of ice-removing (de-icing), regulation temperature thresholds, temperature threshold at the end of the ice-removing and alarm temperature thresholds; electronic cabinet cards (B3, B4, B5, B7, B8) connected each to the corresponding cooled cabinet or room (3, 4, 5, 7, 9, 10) and to the corresponding group card (A2, A6, A8), said cabinet cards being provided with electronic circuits exerting at least one thermometer function, one ice-removing function, one alarm function, one displaying function and an individualization per coded address; an electronic interconnecting card (H) provided with electronic circuits connected to displaying cards (28, 29), with selecting buttons (24, 25, 26, 27), with feeding terminals (15), with connecting sockets (17, 18, 19) for establishing connection with the programmable controller or the computer (20) and/or a printer (21), with input and output terminals (22, 23), and with alarm sensors; and in that bus lines (12) connect the group cards (A2, A6, A8) to electronic cabinet cards (B3, B4, B5, B7, B8) and to the interconnecting card (H), respectively, whereby a centralized and individual control can be exerted on the temperatures and the alarm functions of the cooled cabinets and/or rooms (3, 4, 5, 7, 9, 10) being a portion of the refrigerating installation, through successively depressing said selecting buttons (24, 25, 26, 27) to let feed respectively to the displaying cards the coded addresses of the cooled cabinets and/or rooms, as well as the temperatures or messages displayed therein by duplication, or codes of alarms (warnings) occurring in these cabinets and/or rooms.

2. System according to claim 1, characterized in that the electronic cabinet cards (B) are connected by interconnecting bus lines (11) to the other cabinet cards (B) and/or the group cards (A2, A6, A8), and at their input terminals to at least one temperature sensor (S3, S4, S5, S7, S8; SO3, SO4, SO5, SO7, SO8) and/or a water level sensor, while being connected through their output terminals to a relay that controls de-icing devices, as well as to displaying devices.

3. System according to claim 2, characterized in that said temperature sensors (S, SO) are resistor sensors having a negative temperature coefficient, and in that said de-icing devices comprise de-icing heating resistors.

4. System according to claims 2 and 3, characterized in that said electronic cabinet cards (B3, B4, B5, B7, B8) are adapted to receive from the corresponding temperature sensors temperature data of the refrigerating cabinets and/or rooms, to convert these thus received analog data into digital data, to transmit the latter with their coded address to the group card (A2, A6, A8) of the group to which said cards belong, and to initiate directly in their respective displaying devices a display of the measured temperature.

5. System according to claims 1 to 4, characterized in that, for carrying out its optional display and alarm control function, each electronic cabinet card (B) comprises at its input side two temperature sensors, the first one (S) of which connects the cabinet card (B) respectively to the outlets of the evaporator of the refrigerating circuit of the corresponding cooling cabinet and/or room, while a second temperature sensor (SO) connects the cabinet card (B) to a hot zone of the cooled cabinet and/or room, the first temperature sensor (S) transmitting to the electronic group card (A) the temperature values required for carrying out the de-icing and regulation functions, while the second temperature sensor (SO) allows the measured temperature data or a temperature alarm information to be displayed by the cabinet card (B) when the temperatures of the hot zones of the cabinets and/or rooms exceed predetermined admissible values.

6. System according to claims 1 to 5, characterized in that, in an optional function of manual monitoring of overheating of the evaporator of the cooled cabinet or room and of the inlet and outlet temperatures of the cooled cabinet and/or room air conduit, the electronic cabinet card (B) comprises on its input side four temperature sensors (SO) the first pair of which connects said card (B) to the inlet and outlet points of the evaporator of the cabinet and/or room, while the remaining two sensors connect said card (B) to the inlet and outlet points of the air conduit of the cooled cabinet and/or room.

7. System according to claim 1 to 6, characterized in that, in its optional function of water flow rate monitoring the electronic cabinet card (B) comprises on its input side a water level sensor connecting said card to the de-icing water tank and transmit to the corresponding electronic group card (A) an alarm signal as soon as the de-icing water in the tank raises above a predetermined level.

8. System according to claims 1 to 7, characterized in that the electronic memorizing cards (A') have identical constructions and comprise each connectors and electronic circuits enabling them to operate as programming displays adapted to introduce into the memories of the electronic group cards (A) a program or a series of control, regulating and monitoring instructions for the cooling cabinets and/or rooms (3, 4, 5, 7, 9) wherein are indicated e.g. the time of beginning of de-icing, the maximum duration of de-icing, the temperature threshold values at the end of de-icing, the temperature threshold values for alarm, the electrical energizing basic times of the demisting heating cords.

9. System according to claims 1 to 8, characterized in that said electronic cabinet cards (B) have identical construction and comprise each, on the one hand, electronic circuits enabling them to constitute a clock and storing memories for storing a program or instructions implementing at least one de-icing clock function, one de-icing function, one regulating function, one alarm function, one protection function and optionally one demisting function, and on the other hand, connectors for establishing connection with the bus lines (11) and with the other active electronic cards (B, A or H), as well as connectors for connection with the electric power sources and with the memorizing electronic cards (A').

**Patentansprüche**

1. Steuer-, Regulier- und Kontrollsystem für eine Kühleinrichtung (1), welche einerseits mehrere Gruppen (2, 6, 8) von unter (3, 4, 5) oder über (9, 10) 0 ° C liegenden Temperaturen abgekühlten Kühlmöbeln oder Kühlräumen und andererseits ein programmierbares Kontrollmittel für die Kühleinrichtung, wie einen programmierbaren Automaten oder einen Computer (20) umfasst, dadurch gekennzeichnet, dass das System ferner aufweist: programmierbare elektronische Gruppenkarten (A2, A6, A8) für jede Gruppe (2, 6, 8), wobei jede Karte elektronische Stromkreise besitzt, die mit einem Zeitgeber und mit Programm-oder Befehlsspeichern die die Durchführung wenigstens eines Enteisungszeitgebe-, eines Enteisungs-, eines Temperaturregulier-, eines Alarm- (oder Warn) und eines Schutzvorgangs gewährleisten; elektronische Speicherspeisekarten (A'2, A'6, A'8), deren Anzahl derjenigen der Gruppenkarten gleich ist und die in die Speicher der betreffenden elektronischen programmierbaren Gruppenkarte ein Programm oder Befehle eingeben können, mit Angabe von Grössen, wie Zeitpunkte des Beginns der Enteisungsvorgänge, maximale Enteisungsdauer, Reguliertemperaturschwellen, Temperaturschwellen bei Beendigung der Enteisung, Warnungstemperaturschwellen; elektronische Kühlmöbelkarten (B3, B4, B5, B7, B8), die mit je einem entsprechenden Kühlmöbel bzw. Kühlraum (3, 4, 5, 7, 9, 10), sowie mit der entsprechenden Gruppenkarte (A2, A6, A8) verbunden sind und elektronische Stromkreise, die die Erfüllung wenigstens einer Thermometer-, einer Enteisungs-, einer Warn,- einer Anzeigefunktion, sowie eine Individualisierung für jede kodifizierte Adresse gewährleisten; eine elektronische Verbindungskarte (H) mit an Anzeigekarten (28, 29) angeschlossenen elektronischen Stromkreisen, sowie mit Wählknöpfen (24, 25, 26, 27), Zuleitungsklemmen- oder Anschlüssen (15), Abzweigungen (17, 18, 19) zum Anschluss an den programmierbaren Automaten oder an den Computer (20) und/oder an ein Druckwerk (21), mit Eingängen bzw. Ausgängen (22, 23), sowie mit Warn-Anzeigern; ferner dadurch gekennzeichnet, dass Busleitungen (12) die Gruppenkarten (A2, A6, A8) an die elektronischen Kühlmöbelkarten (B3, B4, B5, B7, B8) und an die Verbindungskarte (H) anschliessen, zwecks Ermöglichung einer zentralen und individuellen Temperatur- und Warnsystemkontrolle der Kühlmöbel und/oder Kühlräume (3, 4, 5, 7, 9, 10) der Kühleinrichtung durch Niederdrücken des jeweils betroffenen Wählknopfs (24, 25, 26, 27), wobei durch die Anzeigekarten, (28, 29) die verschlüsselten Adressen der Kühlmöbel und/oder Kühlräume, sowie die durch Doppelanzeige in diesen Möbeln bzw. Räumen angezeigten Temperaturen bzw. Informationen oder die Koden der genannten Möbel oder Räume betreffenden Warnsignale angezeigt werden.

2. System nach Anspruch 1, dadurch gekennzeichnet, dass die elektronischen Möbelkarten (B) durch Busleitungen (11) mit den anderen Möbelkarten (B) und/oder den Gruppenkarten (A2, A6, A8) und an ihren Eingängen mit wenigstens einem Temperatursensor (S3, S4, S5, S7, S8; S03, S04, S05, S07, S08) und/oder einem Wasserpegelsensor, sowie ferner an ihren Ausgängen mit einem Enteisungsvorrichtungen steuerndes Relais und mit Anzeigevorrichtungen verbunden sind.

3. System nach Anspruch 2, dadurch gekennzeichnet, dass die Temperatursensoren (S, S0) Widerstandssensoren mit negativem Temperaturkoeffizienten sind, und dass die Enteisungsvorrichtungen Enteisungsheizwiderstände aufweisen.

4. System nach Ansprüchen 2 bis 3, dadurch gekennzeichnet, dass die elektronischen Möbelkarten (B3, B4, B5, B7, B8) von den jeweils entsprechenden Temperaturssensoren Werte für die Temperaturen der Kühlmöbel bzw. Räume empfangen, diese Analogwerte in numerische Werte umwandeln, die letzteren mit ihrer Schlüsseladresse an die der betreffenden Gruppe entsprechende Gruppenkarte (A2, A6, A8) weiterleiten, und ihre zugehörigen Anzeigevorrichtungen direkt zwecks Anzeige der gemessenen Temperaturen betätigen.

5. System nach Ansprüchen 1 bis 4, dadurch gekennzeichnet, dass im Hinblick auf ihre wählbare Anzeige- und Warnungskontrollfunktion jede Möbelkarte (B) in ihrem Eingang zwei Temperatursensoren aufweist, nämlich ein erster Sensor (S), der die Möbelkarte (B) mit den jeweils betreffenden Ausgängen des Verdampfers des Kühlkreislaufs des Kühlmöbels- bzw. Raums verbindet, und ein zweiter Sensor (S0), der die Möbelkarte (B) an eine warme Zone des Kühlmöbels- bzw. Raums anschliesst, wobei der erste Sensor (S) an die elektronische Gruppenkarte (A) die zur Durchführung der Enteisung und Regulierung erforderlichen Temperaturwerte überträgt und der zweite Sensor (SO) auf der Gruppenkarte (B) zur Anzeige der gemessenen Temperaturen bzw. einer Temperaturwarnungsinformation dient, wenn die Temperaturen der warmen Kühlmöbel bzw. Kühlraumzonen vorbestimmte zulässige Grenzen überschreiten.

6. System nach Ansprüchen 1 bis 5, dadurch gekennzeichnet, dass im Rahmen einer optionellen Funktion zur manuellen Kontrolle der Überhitzung des Kühlmöbel- bzw. Kühlraum-Verdampfers und der Eingangs- und Ausgangslufttemperaturen im Luftkanal des Kühlmöbels bzw. Kühlraums die elektronische Möbelkarte (B) an ihrem Eingang vier Temperatursensoren (SO) aufweist, wobei die ersten beiden Sensoren diese Karte (B) mit den Eingangs- und den Ausgangspunkten des Kühlmöbel- bzw. Kühlraumverdampfers und die beiden anderen Sensoren die genannte Karte (B) mit den Eingangs- und den Ausgangspunkten des Kühlmöbels- bzw. Kühlraumluftkanals verbinden.

7. System nach Anspruch 1 bis 6, dadurch gekennzeichnet, dass im Rahmen ihrer Wasserdurchsatzmengen-Kontrollfunktion die elektronische Möbelkarte (B) in ihrem Eingang einen Wasserpegelsensor aufweist, der sie mit dem Enteisungswasserbehälter verbindet und an die entsprechende elektronische Gruppenkarte (A) ein Warnsignal abgibt, wenn das Enteisungswasser im Behälter einen vorbestimmten Pegelwert überschreitet.

8. System nach Anspruch 1 bis 7, dadurch gekennzeichnet, dass die elektronischen Speicherkarten (A') gleichartig ausgestaltet sind und jeweils Verbindungsteile und elektronische Stromkreise besitzen, vermittels welcher sie als Programmierdisplay dienen können um in die Speicher der elektronischen Gruppenkarte (A) ein Programm bzw. eine Serie von Steuer-, Regulier- und Kontrollinformationen betreffs der Kühlmöbel und/oder Kühlräume (3, 4, 5, 7, 9) einzugeben, z.B. mit Angabe der Enteisungszeiten, der maximalen Enteisungsdauer, der Temperaturgrenzwerte bei Beendigung der Enteisung, der Temperaturwarngrenzwerte und der Basiszeiten für die Stromversorgung der Entfroster-Heizwiderstände.

9. System nach Anspruch 1 bis 8, dadurch gekennzeichnet, dass die elektronischen Möbelkarten (B) gleichartig ausgestaltet sind und einerseits jeweils elektronische Stromkreise aufweisen, vermittels welcher sie fähig sind, als Zeitgeber zu fungieren, sowie Programm- bzw. Befehlsspeicher, die wenigstens eine der folgenden Funktionen ausüben: Enteisungszeitgeber, Enteisung, Regulierung, Warnung, Schutz und ggf. eine Entfrosterfunktion, ferner andererseits Verbindungsteile zum Anschluss über die Busleitungen (11) an die anderen aktiven elektronischen Karten (B, A oder H), sowie Verbindungsteile zum Anschluss an die elektrischen Stromquellen und an die elektronischen Speicherkarten (A').

FIG_1

EP 0 279 747 B1

# FIG_2

# FIG_3

# FIG_4